Europäisches Patentamt

European Patent Office

Office européen des brevets

(11) Publication number: **0 048 702**
**B1**

# (12) EUROPEAN PATENT SPECIFICATION

(45) Date of publication of patent specification: **19.12.84**

(21) Application number: **81830168.1**

(22) Date of filing: **18.09.81**

(51) Int. Cl.³: **B 29 F 1/00**

(54) Process of and apparatus for automatically providing a pair of handles of a plastic bag.

(30) Priority: **22.09.80 IT 4007680**

(43) Date of publication of application:
**31.03.82 Bulletin 82/13**

(45) Publication of the grant of the patent:
**19.12.84 Bulletin 84/51**

(84) Designated Contracting States:
**AT BE CH DE FR GB LI LU NL SE**

(56) References cited:
**FR-A-2 315 379**
**GB-A- 926 480**
**GB-A-1 159 013**
**US-A-3 362 302**
**US-A-3 461 488**
**US-A-3 647 338**
**US-A-4 012 827**

(73) Proprietor: **Diazzi, Mauro**
**Via Chiesa Sud 243/A**
**Rovererto sul Secchia (Modena) (IT)**

(72) Inventor: **Diazzi, Mauro**
**Via Chiesa Sud 243/A**
**Rovererto sul Secchia (Modena) (IT)**

(74) Representative: **Fiammenghi, Carlo et al**
**c/o Fiammenghi-Fiammenghi Via Quattro**
**Fontane, No. 31**
**I-00184 Roma (IT)**

Courier Press, Leamington Spa, England.

## Description

The present invention relates to a process and a molding unit for the automatic molding and the simultaneous expelling and mutually assembling of the male and female handles of at least a pair of handles made of plastics, preferably polyethylene, which have to be welded to a plastic bag of the type, which housewives use to go shopping. In particular the present invention provides a process and a molding unit for automatically performing the molding, the expulsion and the assembly of the two co-operating handles of at least a pair of handles for a plastic bag, which are simultaneously molded into said molding unit.

Said plastic bags are well known in the art as well as the characteristics of their plastic handles which are provided with snap fastening means consisting of pins and pin receiving holes designed to co-operate with one another for closing the bag in an openable manner, by means of a pressure and a perking action respectively. The designs of said handles can be varied.

Heretofore this process has been performed according to the following operative sequence:

a) the molding in separated molds or in a single mold of one or more male and female handles;

b) the manual separation from the injection sinkheads and from their molds of the obtained plastic handles;

c) the manual connection in pairs of the male and females to one another, causing the penetration of each pin through the respective pin receiving hole of the snap fastening means. This operation is necessary, since the bag body will be then welded to the respective pair of handles in the mutual assembled and locked position thereof.

On the contrary, the present invention aims to provide a process according to which one or more plastic male and female handles for plastic bags can be molded in pairs and can be expelled and simultaneously assembled to one another, ready to be welded to a plastic bag, according to an operative entire automatic sequence and without the intervention of any operator.

The separate molding of components in a single mold and their assembly prior to ejection is known for articles other than interlocking bag handles, as disclosed in e.g. FR—A—2 315 379, US—A—3 461 488 and US—A—4 012 872.

The method of molding, assembling and expelling one or more pairs of separable plastics handles for plastics bags according to the invention is set out in Cl.1 and a molding assembly for carrying out the method is set out in Cl. 2.

Other features and advantages of the present invention will be better understood in the course of the following description of a preferred embodiment of the invention, given merely by way of illustrative example and taken in consideration together with the following drawings, in which:

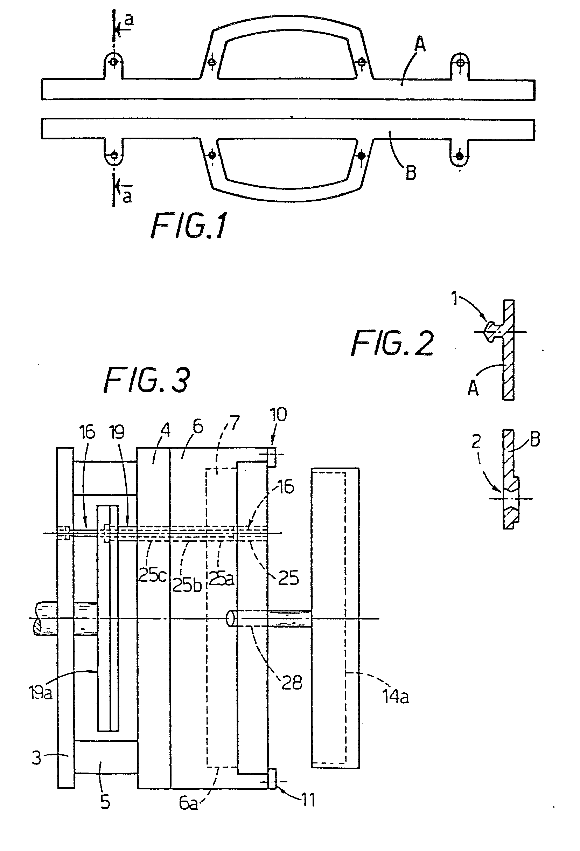

Figures 1 and 2 shows a plan view and the cross section taken on the line a—a of Figure 1 of a pair of conventional male and female handles for a bag;

Figures 3 and 4 show diagrammatically the front view and the top view respectively of the molding unit;

Figure 5 shows diagrammatically and in enlarged scale a detail of the cross section taken on the line d—d of Figure 4 in closed position of the slidable wall members forming the countermolds of each pair of molding chambers of the molding unit;

Figures 6 to 8 shows a detail of the cross section b—b of Figure 5 in three successive postion of the cooperating parts of the modling unit; and

Figure 9 show a detail of the cross section taken on the line c—c of Figure 5.

Now referring to the drawings, 3 is a plate to be securely fixed to one of the press members of a molding press, not shown in the drawings. The plate 3 is made integral with another parallel plate 4 by means of spacing bars 5. A first mold supporting block 6 is fixed to the plate 4 and is so shaped to form an open cavity 6a to receive a mold plate 7, on the outer surface of which is engraved the profile of the outer surface of the female handle B of a handle pair A and B. The mold plate 7 is connected to the block 6 so as to can be easily removed and replaced by another mold plate carrying a different profile so as to enable to obtain handles of different designs.

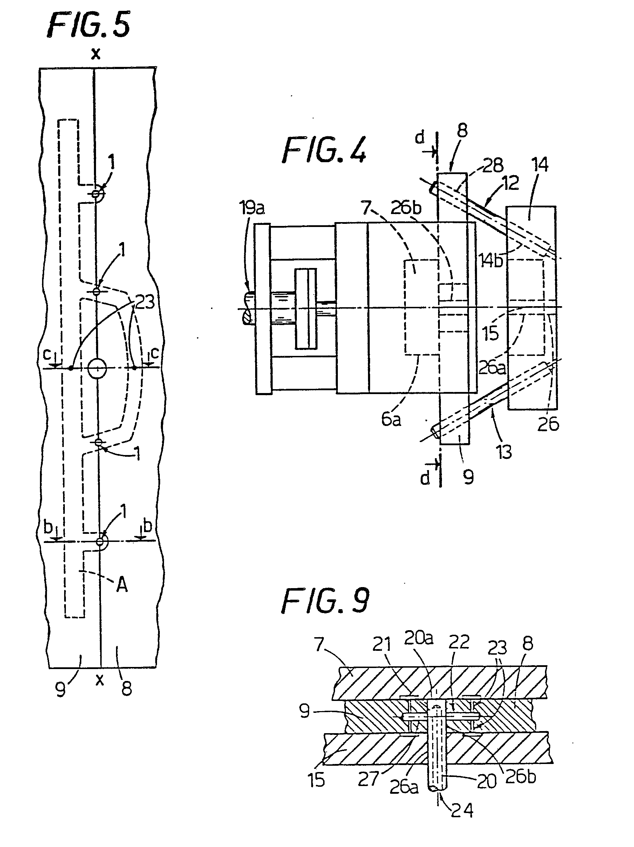

In the mold block 6 seats are also provided to receive two sliding wall members 8 and 9, associated with means adapted to move said wall members 8 and 9 to and from one another, as the two wings of a sliding door. The wall members 8 and 9 are retained and guided by longitudinal stringers 10 and 11 extending one towards the other. The means for causing the reciprocating movements of the wall members 8 and 9 in unison with the reciprocating movements of the two press members (not shown) consists of a pair of horizontal rods 12 and 13 inclined outwardly and fixed to a second mold block 14 designed to be connected to the second of the press members, extending towards the molding chamber of the first mold block 6 and slidably passing through inclined holes 28 provided in the block 14. In the second block 14 is provided a cavity 14a facing the cavity 6a and designed to removably receive a mold plate 15, on the outer surface of which is engraved the profile of the outer surface of the handle A. On the respective main surfaces of the wall members 8 and 9 are engraved profiles adapted to form the respective inner profiles of the handles B and A, when the wall members 8 and 9 are held with force in their contact positions (Figure 5), so that said wall members 8 and 9, in their closure position, constitute the closure means of the two juxtaposed molding chambers and act also as countermolds for the mold 7 and 15, respectively.

As a result of this special structure of the molding unit when the press members, as well as the blocks 6 and 14, together with the molds 7 and 15 are caused to move to and from each other, the sliding wall members 8 and 9 are caused to approach, or move away from one another so as to close or open respectively the or each pair of molding chambers.

When the wall members 8 and 9 are in their closure position, they contact one another along a plan x—x passing through the axis of the pins 1 and of the pin receiving holes 2 co-operating therewith of the snap fastening means and are maintained under pressure in this closure position.

The outer profiles of the handles A and B on the molds 7 and 15 always remain faced to one another in perfect register and therefore as the wall member 8 and 9 are in their contact position two molding chambers are formed with their profiles of the inner sides of the handle pairs in correct register with those engraved on the molds 7 and 15.

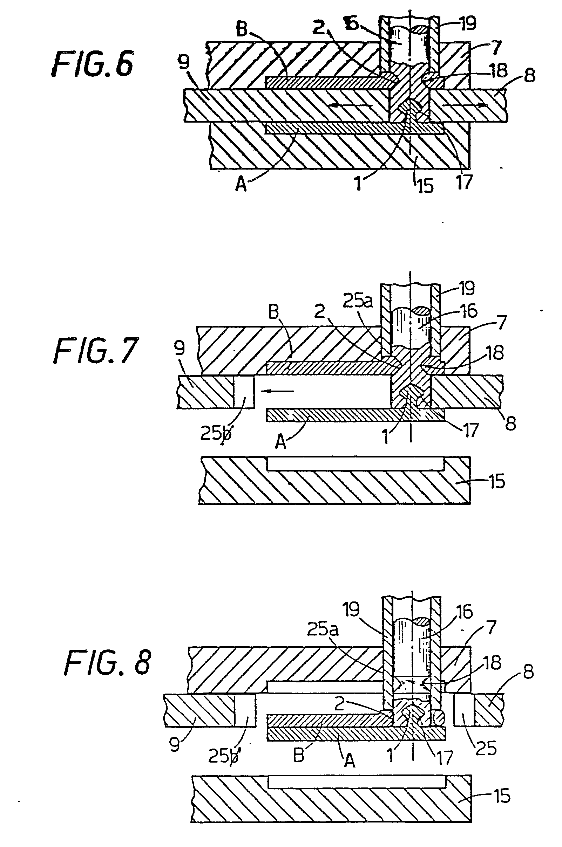

Now, other characteristics of the molding unit of the invention will be illustrated, with reference in particular to Figures 5 to 8.

In those zones where the pins 1 and the pin receiving holes 2 have to be obtained sets of coaxial holes 25a, 25b, 25c are arranged respectively through the plate 7, block 6 and the plate 4 as well as coaxial holes 25, in the end portion of the wall members 8 and 9. Each set of holes, 25, 25b, 25c is designed to receive a coaxial tubular stripper 19 connected to a common stripper control 19a.

Inside each tubular stripper 19 a punch 16 can slide up and down which is fixedly connected, at its outer end, to the plate 3, while its other end comprises a central recess 17 adapted to form a pin 1 in the male handle A, and an annular groove 18, spaced apart from this inner end, of such an extent to form the respective pin receiving hole 2 in the female handle B, as the molding unit is in its operative position, in which the stripper end edge positioned just-over the annular groove 18 serves to form an annular portion of the outer side of the handle B just about the hole 2. The injection of the plastic material (Figure 9) is carried out through a tubular injection nozzle 20 passing through a hole 26a (Figure 4) arranged in the plate 15, a coaxial hole 26 provided through the block 14, and two half-holes 26b provided at the facing edges of the wall members 8 and 9, said holes 26 to 26b having an axis positioned in the plane x—x and perpendicular to the wall members 7 and 8. The nozzle 20 has a closed inner 20a designed to come in contact with the outer surfaces of the mold plate 7. Near the closed end 20a of the nozzle 20 radial holes 21 are provided in the nozzle 20 to which short small tubes 22 are connected, which are designed to enter short holes 27 arranged in aligned positions in the facing edges of the wall members 8 and 9, said holes 27 communicating with pairs of transverse holes 23 which open in both the shaping surfaces of the wall members 8 and 9. Of course, the injection must take place only when the slidable wall members 8 and 9 are in mutual contact (Figures 5, 6 and 9).

After the injection of the molded plastic material through the nozzle hole 24 and the tubes 22 and holes 23 has been completed and the plastic material has been duly hardened, the molding unit can be opened. For such a purpose the press members together with the mold block 6 and 14 carrying the molds 7 and 15 are moved away from each other separating the or each male handle A from the respective molding chambers. As a result of this movement also the wall members 8 and 9 are caused to move away from one another, owing to the presence of the inclined guiding bars 12 and 13. Then all the strippers 19 are caused to advance towards the handles A now suspended on the punches 16 by their pins 1 engaged into the seats 17 of the punches 16. As each stripper 19 advances inside the molding chamber in which the handle B has been formed, it causes said handle B to come out from its molding chamber and the pin receiving hole 2 to be disengaged from the groove 18. At the same time each punch 16 will be raised by a common punch control and, as a result thereof, the pin 1 comes out of the pin seat 17 and snap enters into the respective pin receiving hole 2 obtained in the handle B. In such a manner each pair of handles A and B are extracted from their molding chambers and are assembled with one another. Said assembled handles A and B then fall out of the molding unit; thus a successive molding cycle can be carried out.

In this description neither the structure of the other components of the molding unit, nor the system for the heating and cooling of the mold sinkheads have been described or illustrated since they are well known in the art.

Of course, the shapes, forms and sizes of the components of the molding unit can be varied without departing from scope of the present invention.

**Claims**

1. A method for automatically molding, assembling and expelling one or more pairs of separate plastic handles (A and B) provided with snap interlockable male and female means (1, 2) and to be connected to a plastic bag, comprising the following steps:

a) the molding of each pair of handles (A and B) provided with the respective male and female interlockable means in the form of pairs of pins and receiving holes (1 and 2) in first and second molding cavities placed in side-by-side position and in spaced apart relationship, with the use of a molding unit comprising two main molding cavities separated from one another by a partition wall consisting of two slidable reciprocating walls (8, 9) designed to form the closure surfaces of said first and second molding cavities, in combination with a plurality of reciprocating separated shaping means (16), passing through the first molding cavity, the slidable walls (8, 9) and entering the second molding cavity and each having an end portion so shaped (18, 17) as to shape the pin receiving hole (2) and the respective pin (1);

b) the injection of the plastic material into said two molding cavities and the hardening thereof;

c) the opening of said two main molding cavities, by moving away from each other the mold halves (7, 15) and the movable walls (8 and 9); thereby stripping the handle (A) out of the respective molding cavity whilst handle (B) remains in the respective mold half (7);

d) the withdrawal of all the reciprocating separated shaping means (16) and the simultaneous ejection of the handle (B) from its mold half (7) by expulsion means (19) causing the said handle (A) to approach the handle (B), and the pin receiving holes (2) to be disengaged from the respective shaping end portions (18) of the shaping means (16) and

followed by engagement of handles (A, B) and the stripping of the said separate movable shaping means (16) out of the pins (1) with a simultaneous interlocking of the pins (1) with the corresponding pin receiving holes (2) and expulsion of the assembled handles (A and B) by expulsion means (19).

2. A molding assembly for carrying out the molding method according to claim 1, in a molding press provided with two aligned press members controlled by means to move said press members to and from one another, comprising:

— two facing mold blocks (6, 14) respectively connected to one and to the other of the press members, each block housing a mold plate (7, 15), on which the profile of the outer surface of the respective handle (A and B) is engraved and which serve to define one of the two main molding cavities in correct side-by-side alignment one with the other;

— two slidable wall members (8 and 9), guided and driven to and from each other so as to reciprocate along a plane set at right angle to the direction of movement of the press members and in unison to the movement of these latter, said wall members (8, 9) in their closure position constituting the closure means of the molding cavities and being so shaped as to present on their faces the profile of the inner surfaces of the handles (A and B), said wall members (8, 9) being provided at the edges thereof, designed to come into contact, with semi-cylindric holes (25) forming in combination cylindrical holes having axes parallel to the axis of the press members;

— a plurality of shaping cylindrical cores (16) respectively received into coaxial reciprocating sleeves (19), and passing through respective aligned holes (25a, 25b, 25c) in respectively mold plate (7), block (6) and plate (4) each core having its outer end portion so shaped so as to form respectively one locking pin (1) and the pin receiving hole (2) in the handle (A) and in the handle (b) respectively, as the shaped and portions of said cores (16) are positioned inside the main molding cavities, while the reciprocated sleeves (19) in combination with the cores (16) serve to cause the assembly and expulsion of the handles (A, B); and

— means (20, 21, 22, 24) for supplying mold plastic material in the molding chambers in closed condition thereof.

3. A molding unit according to claim 2, wherein the mold blocks 6 and 14 have cavities (6a, 14a), each removably housing mold plates (7 and 15), on the outer surfaces of which are engraved the profiles of the outer surfaces of the male and female handles (A and B), respectively.

4. A molding unit according to claim 2, wherein the tubular expulsion sleeves (19) are connected to a common control (19a), each sleeve (19) slidably houses a cylindrical core (16), the outer end of which is fixed connected to the press member carrying the block (6), while at the inner end of said core (16) a shaped central recess 17 is provided to form a pin (1) in the handle (A), while spaced apart from said inner end, an annular groove (18) is created on the core surface for forming the cooperating pin receiving hole (2) in the handle (B).

5. A molding unit according to claim 2, wherein in the mold block (14) and the plate (15) carried thereon, as well as at the facing edge of the wall members (8 and 9) coaxial holes (26, 26a, 26b respectively) are provided for housing a hollow nozzle (20) connected through a sinkhead to a source of molded plastic material, said nozzle (20) having radial short tubes (22) positioned near its inner closed end (20a), said tubes (22) entering in aligned short holes (27) arranged in the facing edges of the wall members (8 and 9), and which communicate with pairs of transverse holes (23) which open on the main surfaces of the wall members (8 and 9).

**Patentansprüche**

1. Verfahren zum selbsttätigen Formen, Zusammensetzen und Entformen einer oder mehrerer Paare von trennbaren Handgriffen (A un B) aus Plastik, die mit männlichen und weiblichen Schnappverschlüssen (1, 2) versehen und an einen Kunststoffsack anzubringen sind, dadurch gekennzeichnet, dass es die folgende Schritte enthält:

a) das Formen von jedem Paar Handgriffe (A und B), die mit zugehörigen, männlichen und weiblichen Schnappverschlüssen in Form eines Paares von Zapfen und Aufnameloch (1 und 2) versehen sind, in ersten und zweiten, Seite and Seite mit Abstand gestellten Formhöhlungen unter Einsatz von einer Formmaschine bestehend aus zwei Hauptformhöhlungen, die durch eine aus zwei die Verschlüssflächen von den obenerwähnten ersten und zweiten Formhöhlungen bildenden, abwechselnd verschiebbaren Wänden (8, 9) bestehende Trennwand voneinander getrennt sind und mit einer Vielzahl von abwechselnd bewegbaren, getrennten Formungsteilen (16) versehen sind, die durch die erste Formhöhlung, die verschiebbaren Wände (8, 9) und die zweite Formhöhlung durchgeführt sind und je ein Ende (18, 17) aufweisen, das derart ausgebildet ist, dass das Aufnahmeloch (2) und der zugeordnete Zapfen (1) dadurch geformt werden;

b) das Spritzen von dem plastischen Kunststoff in die zwei obenerwähnten Formhöhlungen und das Aushärten diese Materials;

c) das Öffnen von den zwei Hauptformhöhlungen unter Abtrennung der Formhälften (7, 15) von den verschiebbaren Wänden (8 und 9); daraufhin wird der Handgriff (A) aus der zugehörigen Formhöhlung entformt, während der Handgriff (B) in der zugehörigen Formhälfte (7) bleibt;

d) die Ausziehung von allen abwechselnd bewegbaren, getrennten Formungsteilen (16) und die gleichzeitige Entformung des Handgriffes (B) aus seiner Formhälfte (7) durch Ausstossmittel (19), wobei sich der Handgriff (A) dem Handgriff (B) annähert und die Aufnahmelöcher (2) von den zugehörigen Enden (18) der Formungsteilen (16) ausgelöst werden; daraufhin greifen die Handgriffe (A, B) ineinander ein und werden die obenerwähnten bewegbaren, getrennten Formungsteile (16) aus den Zapfen (1) entformt, wobei diese Zapfen (1) in die zugeordneten Aufnahmelöcher (2) gleichzeitig einschnappen und die zusammengesetzten Handgriffe (A und B) durch Ausstossmittel (19) entformt werden.

2. Vorrichtung zur Durchführung des Verfahrens nach Anspruch 1 mit einer Formpresse, die mit zwei von einem antriebsmittel zueinander und voneinander in Bewegung gesetzten, nacheinander gerichteten Pressgliedern versehen ist, gekennzeichnet durch:

— zwei nacheinander gerichteten, mit einem bzw. dem anderen Pressglied verbundenen Formblöcken (6, 14), die je eine Formplatte (7, 15) aufnehmen, in der das äusser Profil des zugehörigen Handgriffes (A und B) eingraviert ist, wobei jede Formplatte jeweils eine von beiden Hauptformhöhlungen Seite and Seite mit der anderen aufstellt;

— zwei verschiebbaren Wänden (8 und 9), die zueinander und voneinander geführt und angetrieben werden, so dass sie sich in eine Ebene, die einen rechten Winkel mit der Bewegungsrichtung der Pressglieder einschliesst, in Einklang mit den letzten abwechselnd bewegen, wobei diese verschiebbaren Wände (8, 9) in ihrem geschlossene Zustand die Verschlussmittel der Formhöhlungen bilden und so ausgebildet sind, dass sie das Profil der Innenflächen der Handgriffe (A und B) aufweisen, wobei die obenerwähnten Wände (8, 9) an ihren in Berührung kommenden Enden mit halbzylinderförmigen Löchern vershen sind, die bei der Verbindung zylinderförmige Löcher mit den der Achse der Pressglieder parallelen Achsen bilden;

— einer Vielzahl von zylinderförmigen Formungsteilen (16), die jeweils in coaxialen, abwechselnd bewegbaren Hülsen (19) aufgenommen und durch nacheinander gerichtete Löcher (25a, 25b, 25c) eingeführt sind, die in der Formplatte (7) bzw. in dem Block (6) bzw. in der Platte (4) gebildet sind, wobei die äusseren Enden jedes Formungsteils so ausgebildet sind, dass sie jeweils eine Befestigungszapfen (1) und ein Aufnahmeloch (2) in dem Handgriff (A) bzw. in dem Handgriff (B) bilden, wenn diese Enden der Formungsteile (16) innerhalb der Hauptformhöhlungen angeordnet sind, während die abwechselnd bewegbaren Hülse (19) zusammen mit den Formungsteilen (16) die Zusammensetzung und die Entformung der Handgriffe (A und B) verursachen; und

— Mittel (20, 21, 22, 24) zur Einspeisung von plastischen Kunststoff zu den Formhöhlungen in ihrem geschlossenen Zustand.

3. Pressformvorrichtung nach Anspruch 2, dadurch gekennzeichnet, dass die Formblöcke (6 und 14) Formhöhlungen (6a, 14a) aufweisen, in denen lösbare Formplatten (7 und 15) aufgenommen sind, deren äusseren Flächen mit den Profilen der äusseren Flächen der männlichen bzw. weiblichen Handgriffe (A und B) eingraviert sind.

4. Pressformvorrichtung nach Anspruch 2, dadurch gekennzeichnet, dass die rohrförmigen Ausstosshülsen (19) mit einem gemeinsamen Steuerglied (19a) verbunden sind, dass in jeder Hülse (19) ein verschiebbarer, zylinderförmiger Formungsteil (16) aufgenommen ist, dessen äusseres Ende mit dem den Block (6) tragenden Pressglied fest verbunden ist, dass der Formungsteil (16) an seinem inneren Ende eine zentrale geformte Ausnehmung (17) aufweist, die einen Zapfen in dem Handgriff (A) bildet, und das eine ringförmige, von diesem inneren Ende entformte Nut (18) in der Fläche des Formungsteils ausgebildet ist, die das zugeordnete Aufnahmeloch (2) in dem Handgriff (B) bildet.

5. Pressformvorrichtung nach Anspruch 2, dadurch gekennzeichnet, dass in dem Formblock (14) und in der daraufgetragenen Platte (15) sowie an den gegenüberliegenden Kanten der Wände (8 und 9) coaxiale Löcher (26 bzw. 26a bzw. 26b) gebildet sind, in denen eine hohle, mit einer Quelle von plastischen Kunststoff durch einen Anguss verbundene Düse (20) vorgesehen ist, dass diese Düse (20) radiale, kurze, nahe bei ihrem inneren Ende (20a) angeordnete Röhren (22) aufweist, wobei diese Röhren (22) in nacheinander gerichtete, kurze Löcher (27) eingeführt sind, die in den gegenüberliegenden Kanten der Wände (8 und 9) gebildet sind und mit Paaren Querlöcher (23) in Verbindung stehen, die in die Hauptflächen der Wände (8 und 9) einmünden.

## Revendications

1. Procédé de moulage, assemblage et expulsion automatique d'une ou de plus paires de poignées plastiques séparables (A et B), munies de moyens mâles et femelles, interconnectables à déclenchement (1, 2) et à se relier à une sac en matière plastique, comprenant les opérations suivantes:

a) le moulage de chaque paire de poignées (A et B), munis de respectifs moyens mâles et femelles interconnectables, et ayant la forme de paires de pivots et de trous de logement (1, 2), dans une première et seconde cavités, placées de côte, mais écartées l'une de l'autre, en utilisant un dispositif de moulage comportant deux cavités principales de moulage, séparées l'une de l'autre par un cloison formé par deux parois (8, 9) coulissantes en sens opposé et destinées à former les surfaces de fermetuere des dites première et seconde cavités de moulage, en combinaison avec une pluralité de moyens de façonnage séparés (16), qui passent au travers de la première cavité de moulage et des parois coulissantes (8, 9) et qui entrent dans la seconde cavité de moulage, chacun de ces moyens ayant une partie d'extremité (18, 17) apte à façonner un trou (2), destiné à recevoir un pivot, et le pivot (1) respectif;

b) l'injection de la matière plastique dans ces cavités de moulage et le durcissement de cette matière;

c) l'ouverture de deux cavités principales susdites à l'aide d'un mouvement d'éloignement l'une de l'autre des deux moitiés (7, 15) de la moule et des parois mobiles (8 et 9), de manière à arracher la poignée (A) hors de la cavité respective de moulage, tandis que la poignée (B) reste dans la respective moitié (7) de la moule;

d) la rétrocession de tous les moyen de façonnage (16) séparés et à mouvements alternatifs, et l'expulsion simultanée de la poignée (B) hors de sa moitié de la moule (7) à l'aide des moyens d'expulsion (19), de manière que cette poignée (A) puisse s'approcher à la poignée (B) et que les trous (2), qui logent les pivots, puissent se dégager des respectives parties de façonnage (18) des moyens de façonnage (16) et suivi par l'engagement mutuel des poignées (A et B); et l'arrachement de moyens mobiles séparés de façonnage (16) hors des pivots (1) avec une simultanée interconnection des pivots (1) avec les correspondant trous (2) logeant les pivots et avec l'expulsion simultanée des poignées assemblées (A et B) par les moyens d'expulsion (19).

2. Dispositif de moulage pour l'exploitation du procédé de moulage suivant la revendication 1, dans une presse à mouler, munie de deux organes de pressage alignés et contrôlés par des moyens apts à éloigner ou approcher ces organes de pressage l'une par rapport à l'autre et comportant:

— deux blocs de moulage, situés en vis-à-vis (6, 14), reliés respectivement à l'un et à l'autre des organes de pressage, chaque bloc logeant une plaque de moulage (7, 15), sur laquelle a été gravé le profil de la surface extérieure de la respective poignée (A et B), plaques qui servent à définir une des deux cavités de moulage principales selon un correct alignment au côté l'une de l'autre;

— deux éléments coulissants de paroi (8 et 9), guidés et reliés respectivement à l'un et à l'autre des organes de pressage, de sorte à se déplacer réciproquement le long d'un plan perpendiculaire à la direction de mouvement des organes de pressage, ces éléments de paroi (8, 9), dans leur position de fermeture, constituant le moyen de fermeture des cavités de moulage et étant façonnés de manière que leurs surfaces presentent le profil des surfaces intérieures des poignées (A et B), ces éléments de paroi (8, 9) étant munis, sur leurs bords destinés à entrer en contact, par deux trous demi-cylindriques (25) qui forment, en combinaison, des trous cylindriques ayant les axes parallèles à l'axe des éléments de pressage;

— une pluralité de noyaux cylindriques de façonnage, respectivement logés dans des manchons coaxiaux à mouvement alternatif (19) et qui passent à travers des trous alignés (25a, 25b, 25c) respectivement de la plaque (7), du bloc (6) et de la plaque (4), chaque noyau ayant sa partie d'extremité, façonnée de manière à former respectivement un pivot de blocage (1) et une trou (2) pour recevoir ce pivot dans la poignée (A) et respectivement dans la poignée (B), lorsque les parties façonnées d'extrémité de ces noyaux (16) sont plaçés à l'intérieur des cavités principales de moulage, tandis que les manchons à mouvement alternatif (19), in combinaison avec les noyaux (16), servent à provoquer l'assemblage et l'expulsion des poignées (A, B); et

— des moyens (20, 21, 22, 24) pour l'alimentation de la matière plastique fondue dans les chambres de moulage, en conditions de fermeture.

3. Dispositif de moulage suivant la revendication 2 dans lequel les blocs de moulage (6 et 14) comportent des cavités (6a, 14a), où les plaques de moulage (7 et 15) sont insérées d'une manière amovible, tandis que sur leurs surfaces extérieures sont respectivement gravés les profils des surfaces extérieures des poignées mâle et femelle (A et B).

4. Dispositif de moulage suivant la revendication 2, dans laquel les manchons tubulaires d'expulsion (19) sont reliés à une commande commune (19a) et chaque manchon (19) loge, d'une manière coulissante, un noyau cylindrique (16), dont l'extremité extérieure est fixée à l'élément de pressage qui porte le bloc (6), tandis que à l'extremité intérieure de ce noyau (16) est prévue une cavité centrale façonnée (17) apte à former un pivot (1) dans la poignée (A), et que sur la surface du noyau est obtenue une rainure annulaire (18), écartée de l'extrémité intérieure susdite, ayant le but de former le trou (2) coopérant pour la réception du pivot (2) dans la poignée (B).

5. Dispositif de moulage suivant la revendication 2, dans lequel des trous coaxiaux (respectivement 26, 26a, 26b) sont prévus dans le bloc de moulage (14) et dans la plaque (15) supportée, ainsi que sur les bords en vis-à-vis des éléments de parois (8 et 9), à fin de loger une buse creux (20) relié, par une tête d'injection, à une source de matière plastique fondue, ce buse (20) comportant de courts tubes radiaux, placés à proximité de son extrémité intérieure fermée (20a), ces tubes (22) passant au travers de courts trous alignés (27) percés dans les bords, en vis-à-vis, des éléments de paroi (8 et 9) et qui communiquent avec les paires de trous transversaux (23) qui s'ouvrent sur les surfaces principales des éléments de paroi (8 et 9).

0 048 702

FIG.1

FIG.2

FIG.3

*FIG.5*

*FIG.4*

*FIG.9*

**FIG.6**

**FIG.7**

**FIG.8**